# EUROPÄISCHE PATENTSCHRIFT

(11) **EP 0 937 118 B1**
(45) Veröffentlichungstag und Bekanntmachung des Hinweises auf die Patenterteilung: **30.08.2000**
(21) Anmeldenummer: 97948820.2
(22) Anmeldetag: 28.10.1997
(51) Int. Cl.: C08J 9/20

(54) **KONTINUIERLICHES VERFAHREN ZUR HERSTELLUNG VON EXPANDIERBAREN STYROLPOLYMERISATEN**
CONTINUOUS PROCESS FOR PREPARING EXPANDIBLE STYRENE POLYMERS
PROCEDE CONTINU DE PREPARATION DE STYRENE-POLYMERES EXPANSIBLES

(30) Priorität: 07.11.1996 DE 19645948
(43) Veröffentlichungstag der Anmeldung: 25.08.1999
(73) Patentinhaber: BASF AKTIENGESELLSCHAFT, 67056 Ludwigshafen (DE)
(72) Erfinder: BAUMGÄRTEL, Michael, 67271 Kleinkarlbach (DE); DEMBEK, Gerhard, D-67098 Bad Dürkheim (DE); HAHN, Klaus, D-67281 Kirchheim (DE); HOLOCH, Jan, D-69181 Leimen (DE); HUSEMANN, Wolfram, D-67435 Neustadt (DE); KAEMPFER, Knut, D-67065 Ludwigshafen (DE); LAY, Peter, D-67071 Ludwigshafen (DE); RÜCK, Swen, D-67549 Worms (DE); SCHIESSL, Michael, D-67454 Ha loch (DE); WITT, Michael, D-67246 Dirmstein (DE)
(86) Internationale Anmeldenummer: EP9705940
(87) Internationale Veröffentlichungsnummer: WO9820064

(56) Entgegenhaltungen:
- DE-A- 3 901 329
- DE-A- 4 431 211

## Beschreibung

Die Erfindung betrifft ein Verfahren zur Herstellung von expandierbaren Styrolpolymerisaten mit einer kontinuierlichen Verfahrensführung.

Expandierbare Partikel aus Styrolpolymerisaten (EPS) sind seit langem bekannt und vielfach in der Literatur beschrieben.

Die Herstellung derartiger Produkte erfolgt üblicherweise nach dem Verfahren der Suspensionspolymerisation, bei dem die organische Phase, welche die Monomeren und gegebenenfalls die Starter und weitere organische Hilfsstoffe enthält, in einer wäßrigen Phase in Form von Tröpfchen verteilt und polymerisiert wird. Das Treibmittel, zumeist niedrig siedende Kohlenwasserstoffe, wird während der Polymerisation oder in einem nachfolgenden Verfahrensschritt zugesetzt.

Die üblichen diskontinuierlichen Verfahren zur Herstellung von EPS weisen jedoch die für Batch-Prozesse typischen Nachteile auf: Es gibt Qualitätsschwankungen zwischen den Einzelchargen, und es besteht ein hoher Personalbedarf zur Durchführung des Verfahrens. Darüber hinaus ist die Batchfahrweise für die Herstellung von EPS auch aus energetischer Sicht ungünstig. Trotz des exothermen Charakters der Reaktion wird zu Beginn Energie benötigt, um den Reaktionsansatz aufzuheizen und die Polymerisation zu initiieren.

Es sind auch Verfahren zur kontinuierlichen Polymerisation von Vinylmonomeren in Masse oder Suspension oder in einer Kombination aus beiden Verfahren bekannt.

So wird in US-A-2,566,567 ein Verfahren zur Herstellung von Polystyrolperlen beschrieben, bei dem Styrol bis zu einem Umsatz von etwa 70 % in Masse vorpolymerisiert und das Vorpolymerisat abgekühlt und granuliert wird. Das Granulat wird dann in einer viskosen wäßrigen Lösung suspendiert und danach in einem kontinuierlichen Turmreaktor auspolymerisiert.

In SU-A-412 919 wird ein kontinuierliches Verfahren zur Herstellung von Polystyrolpartikeln beschrieben, bei dem das Styrol zunächst bis zu einem Umsatz von 30-40 % polymerisiert, in wäßriger Lösung suspendiert und in einer Reihe von 4 bis 6 Reaktoren mit dazwischen angeordneten Konfusor/Diffusor-Buchsen polymerisiert wird.

Diese Verfahren sind jedoch nicht für die Herstellung treibmittelhaltiger Styrolpolymerisate geeignet, da zum einen durch die Anwesenheit des Treibmittels die Stabilität der Perlen geringer wird, so daß mit Koaleszenzen in der wäßrigen Suspension zu rechnen ist, zum anderen beim Zusatz des Treibmittels mit erhöhtem Druck gearbeitet werden muß. Das Verfahren nach SU-A-412 919 hat darüberhinaus den weiteren Nachteil, daß das Polymerisat mit einem relativ hohen Reststyrolgehalt anfällt, der bei Polystyrol-Schaumstoffen nicht tolerierbar ist.

Die Aufgabe der Erfindung bestand darin, ein kontinuierliches Verfahren zur Herstellung von EPS zu entwickeln, das einfach zu betreiben ist und zu Perlen mit enger Perlgrößenverteilung und niedrigem Reststyrolgehalt führt.

Zur Lösung dieser Aufgabe wird in der deutschen Patentanmeldung P 195 30 765 ein Verfahren zur kontinuierlichen Herstellung von expandierbaren Styrolpolymerisat-Partikeln vorgeschlagen, welches umfaßt:
a. Polymerisieren in Masse bis zu einem Umsatz von 10 bis 80 %,
b. Dispergieren des Vorpolymerisates in flüssiger Form in einer wäßrigen Phase in Gegenwart von Suspensionsstabilisatoren,
c. Auspolymerisieren des Vorpolymerisates in wäßriger Suspension auf einen Reststyrolgehalt von weniger als 2000 ppm,
wobei das Treibmittel in jedem der drei Teilschritte zudosiert werden kann.

Es wurde nun gefunden, daß es alternativ dazu auch möglich ist, in der Verfahrensstufe a. eine 10 bis 80 gew.-%ige Lösung von Polystyrol in Styrol bereitzustellen und diese Lösung dann nach den Verfahrensschritten b. und c. in wäßriger Phase zu dispergieren und das Styrol kontinuierlich auszupolymerisieren.

Styrolpolymerisate im Sinne der vorliegenden Erfindung sind Polystyrol oder Mischpolymerisate des Styrols mit bis zu 50 Gew.-%, bezogen auf das Mischpolymerisat, mindestens eines weiteren olefinisch ungesättigten Monomeren.

Als Comonomere kommen z.B. in Frage α-Methylstyrol, kernhalogenierte Styrole, kernalkylierte Styrole, Acrylnitril, Ester der Acryl- oder Methacrylsäure von Alkoholen mit 1 bis 8 Kohlenstoffatomen, N-Vinylcarbazol und Maleinsäure(anhydrid). Vorteilhaft enthält das Styrolpolymerisat eine geringe Menge eines Verzweigers, d.h. einer Verbindung mit mehr als einer, vorzugsweise 2 Doppelbindungen, einpolymerisiert. Der Verzweiger wird im allgemeinen in Mengen von 0,005 bis 0,1 Gew.-%, bezogen auf das Styrolpolymerisat, verwendet.

Zu den Teilschritten des erfindungsgemäßen Verfahrens ist folgendes zu sagen:

Im Verfahrensschritt a. wird eine 10 bis 80 Gew.-%ige Lösung von Polystyrol (bzw. einem Copolymerisat mit bis zu 50 Gew.-% der genannten Monomeren) in Styrol (bzw. in einer Mischung aus Styrol und bis zu 50 Gew.-% der genannten Monomeren) hergestellt. Dies kann entweder diskontinuierlich in einem oder mehreren Lösungskesseln oder kontinuierlich in einem Extruder geschehen.

Bei der diskontinuierlichen Arbeitsweise arbeitet man in einem oder mehreren Lösungskesseln, zweckmäßigerweise in zwei Rührkesseln, um die nachfolgenden Verfahrensstufen dann kontinuierlich betreiben zu können. Der Löseprozeß wird vorzugsweise bei 20 bis 50°C durchgeführt, er dauert im allgemeinen 1,5 bis 6,5 Stunden. Während in dem einen Kessel das Polystyrol gelöst wird, kann aus dem anderen Kessel die fertige Lösung in die zweite Verfahrensstufe überführt werden. Die bevorzugte Konzentration der styrolischen Lösung von Polystyrol beträgt 10 bis 80 Gew.-%, insbesondere 20 bis 60 Gew.-%.

Bei der kontinuierlichen Arbeitsweise wird in einem Extruder bei 110 bis 200°C, vorzugsweise bei 130 bis 160°C Polystyrol aufgeschmolzen, und in die Schmelze wird Styrol eingepreßt und homogen vermischt. Die bevorzugte Polystyrolkonzentration beträgt hier 30 bis 70 Gew.-%

In beiden Fällen kann man das zu lösende Polystyrol ganz oder teilweise durch treibmittelhaltiges Polystyrol ersetzen, z.B. durch sogenannte Randfraktionen, die bei der Auftrennung des bei der EPS-Herstellung anfallenden Perlspektrums als zu große oder zu kleine Perlen ausgesiebt werden. In der Praxis haben derartige nicht verwertbare Randfraktionen Perldurchmesser von größer als 2.5 mm bzw. kleiner als 0,2 mm. Alternativ kann auch treibmittelfreies Polystyrol-Recyclat eingesetzt werden.

Im Verfahrensschritt b. wird die Polystyrol-Lösung in der wäßrigen Phase dispergiert. Dabei liegt das Vorpolymerisat je nach Temperatur als mehr oder weniger viskose Lösung in Styrol vor. Zur Einstellung der gewünschten Produktviskosität kann die Lösung über einen Wärmetauscher temperiert werden.

Zur Durchführung der Dispergierung sind prinzipiell alle bekannten Dispergiervorrichtungen geeignet, bevorzugt werden statische Mischer, dynamische Mischer und Rührkessel mit hohen Rührerdrehzahlen.

Weiterhin geeignet sind auch die Zertropfung am Freistrahl, die Tröpfchenerzeugung an vibrierenden Düsen und Lochplatten, die Zerstäubung von Flüssigkeiten mittels Hohlzylindern und Scheiben oder rotierenden Walzen und Hochdruck-Gegenstrom-Injektionsverfahren. Die Dispergierung kann auch mit Hilfe einer Füllkörperschüttung aus Glaskugeln oder Edelmetallkugeln erfolgen. Bewährt hat sich eine Kugelschüttung mit monomodaler Teilchengrößenverteilung. Der Durchmesser der Kugeln beträgt 1 - 25 mm, bevorzugt 4 - 10 mm.

Als dynamische Mischer können übliche Rotor-Stator-Systeme eingesetzt werden. Bevorzugt sind Einschneckenmaschinen, die im Baukastenprinzip mit Schnecken-, Rotor-Stator- oder Walzen-Elementen bestückt werden können. Die Schneckenelemente dienen zum Fördern des Produkts, während in den Rotor-Stator-Elementen intensiv gemischt, gedehnt und geschert werden kann. Durch Änderung der Drehzahl läßt sich das Schergefälle im Rotor-Stator-Teil oder im Couette-Spalt und damit die Perlgrößenverteilung der organischen Phase in einen großem Bereich einstellen.

Sehr vorteilhaft können auch statische Mischer eingesetzt werden, in denen durch die laminare oder turbulente Strömung um die festen Einbauten Scherfelder erzeugt werden. Gebräuchliche Typen von statischen Mischern sind z.B. Kenics-Mischer, Ross ISG-Mischer und Sulzer SMV-, SMXL- oder SMX-Mischer.

Eine Verfahrensvariante besteht in einem zwei- oder mehrstufigen Dispergierprozeß, wobei zunächst eine Grobzerteilung des Styrolvorpolymerisats und anschließende Dispergierung auf die gewünschte Teilchengröße stattfindet.

Das Phasenverhältnis zwischen organischer und wäßriger Phase kann in weiten Verhältnissen variiert werden.

Um jedoch die Dimension des Reaktors für den Verfahrensschritt c. zu minimieren, ist es vorteilhaft, mit einem möglichst hohen Gehalt an organischer Phase zu arbeiten. Bevorzugt ist ein Verhältnis von organischer Phase zu Wasserphase von 0,5 : 1,0 bis 1,5 : 1,0.

Um eine stabile Tropfenform zu gewährleisten und eine Koagulation des Reaktionsansatzes zu verhindern, erfolgt die Dispergierung in Anwesenheit von Suspensionsstabilisatoren. Als Suspensionsstabilisatoren können prinzipiell die üblichen und bekannten Verbindungen verwendet werden. Beispielhaft seien genannt Gelatine, Polyvinylalkohol, Stärke, Polyvinylpyrrolidon, Polyacrylsäuren und deren Salze, wasserunlösliche Komponenten wie Magnesiumsilikat, Celluloseester einschließlich Methylcellulose und Hydroxyethylcellulose sowie schwer in Wasser lösliche Salze wie Calziumphosphat und Magnesiumpyrophosphat, sogenannte Pickeringsalze, die in Verbindung mit Extendern, insbesondere solchen mit Sulfonatgruppen, wie beispielsweise Dodecylbenzolsulfonat, eingesetzt werden. Bei der Auswahl der Stabilisatoren ist darauf zu achten, daß diese ein hohes Stabilisierungsvermögen besitzen, was entweder über den molekularen Aufbau oder über die angewandten Konzentrationen erreicht werden kann.

Da, im Gegensatz zum herkömmlichen Batch-Verfahren, die Scherkräfte nur sehr kurze Zeit, zumeist nur wenige Sekunden, auf die Suspension einwirken, und zum anderen die anpolymerisierte organische Phase aufgrund ihrer erhöhten Klebrigkeit besonders zur Koaleszenz neigt, muß der Suspensionsstabilisator seine stabilisierende Wirkung spontan entfalten.

Aus diesem Grund ist es zweckmäßig, einige der genannten Stabilisatoren vor dem Zusammenbringen mit der organischen Phase zu aktivieren. So muß Polyvinylpyrrolidon mit Styrol gepfropft werden, um als Suspensionsstabilisator wirken zu können. Beim üblichen Batch-Verfahren läuft diese Pfropfung in den ersten Minuten nach der Stabilisatorzugabe ab. Beim erfindungsgemäßen Verfahren beträgt die zur Stabilisierung zur Verfügung stehende Zeit nur wenige Sekunden.

Aufgrund ihrer schnellen Wirksamkeit werden für das erfindungsgemäße Verfahren Pickering-Stabilisatorsysteme bevorzugt. Ein besonders geeignetes Pickering-Stabilisatorsystem besteht aus Magnesiumpyrophosphat und einem Sulfonatgruppen enthaltenden Extender.

Die den Suspensionsstabilisator enthaltende wäßrige Phase sollte vor dem Mischen mit der organischen Phase erwärmt werden. Die Temperatur der wäßrigen Phase sollte dabei so gewählt werden, daß die Temperatur der Suspension nach der Dispergierstufe 80 bis 160°C, vorzugsweise 110 bis 140°C beträgt. Zur Erwärmung der wäßrigen Phase kann vorteilhafterweise die bei der Polymerisation des Styrols im ersten Verfahrensschritt freiwerdende Reaktionswärme verwendet werden.

Im dritten Verfahrensschritt c. wird die im zweiten Schritt erzeugte, dispergierte Polystyrol/Styrol-Phase in Suspension auspolymerisiert. Dies geschieht in Gegenwart von üblichen Polymerisationsinitiatoren, die vor der Dispergierung der organischen Phase zudosiert werden.

Die Suspensionspolymerisation kann in den hierfür üblichen Reaktoren durchgeführt werden. Geeignet sind z.B. der kontinuierlich durchströmte Rührkessel, beispielsweise Reaktoren und Rohrreaktoren mit oder ohne statische Rührelemente, Sulzer-Misch-Reaktoren und Rohrreaktoren.

Die Suspension wird vorzugsweise durch einen Rohrreaktor mit einem l:d-Verhältnis von größer als 1000:1, vorzugsweise größer als 10000:1 in einer turbulenten Pfropfenströmung durchbewegt, wobei die vollständige Auspolymerisation des Styrols stattfindet.

Bevorzugt werden turbulent durchströmte Rohrreaktoren eingesetzt, da bei ihnen das Verkleben der Perlen unterdrückt und ein gleichmäßiger Reststyrolgehalt über alle Perlen aufgrund der engen Verweilzeitverteilung erreicht wird. Dabei kann der Reaktor auch in mehrere Temperaturzonen mit unterschiedlichen Temperaturen aufgeteilt sein.

Bei der Dimensionierung der Reaktoren für den dritten Teilschritt des erfindungsgemäßen Verfahrens ist darauf zu achten, daß die Verweilzeit der Reaktionsmischung im Reaktor groß genug ist um einen praktisch vollständigen Umsatz des Styrols zu gewährleisten. Ein Gehalt an Reststyrol von mehr als 2000 ppm ist aus ökologischen Gründen zu vermeiden. Bevorzugt sind Reststyrolgehalte von weniger als 1000 ppm.

Die für einen vollständigen Umsatz des Styrols notwendige Reaktionszeit beträgt in der Praxis zumeist mindestens 3 Stunden. Der für den dritten Teilschritt des erfindungsgemäßen Verfahrens bevorzugt eingesetzte turbulent durchströmte Rohrreaktor ist vorzugsweise vertikal angeordnet.

Nach der Auspolymerisation der Perlen wird das Reaktionsgemisch abgekühlt, und die Perlen werden auf übliche Weise, zum Beispiel mittels Siebschleudern, von der wäßrigen Phase getrennt und in bekannter Weise aufgearbeitet.

Bei dem erfindungsgemäßen Verfahren muß nach der Dosierung des Treibmittels unter einem erhöhten Druck gearbeitet werden. Dieser Überdruck beträgt zumeist 8 bis 25 bar, bevorzugt 10 bis 20 bar. Das Ausschleusen der Perlen erfolgt also aus einem unter Druck stehenden Anlagenteil. Möglichkeiten des Austrags der Perlen aus der Druckzone sind z.B. eine Druckverluststrecke, eine druckfeste Zellenradschleuse oder ein unter Druck stehender Rührkessel und eine Pumpe.

Nach der Trennung der Perlen von der wäßrigen Phase werden diese, wie oben ausgeführt, aufgearbeitet. Die Aufarbeitung erfolgt wie nach der diskontinuierlichen EPS-Herstellung und umfaßt beispielsweise die Trocknung, Siebung und Beschichtung der Perlen. Eventuell anfallende unverwertbare Randfraktionen können nach Auflösung in Styrol wieder in den ersten Verfahrensschritt zurückgeführt werden.

Als Treibmittel können im erfindungsgemäßen Verfahren die aus der diskontinuierlichen EPS-Herstellung bekannten Verbindungen eingesetzt werden. Vorzugsweise verwendet werden C₃- bis C₇-Kohlenwasserstoffe, insbesondere Propan, Butan, Isobutan, n-Pentan, Isopentan, Neopentan und/oder Hexan oder Gemische aus diesen Kohlenwasserstoffen mit Kohlendioxid. Die Menge des Treibmittels beträgt üblicherweise 3 bis 8 Gew.-%, bezogen auf das Styrolpolymerisat.

Die Dosierung des Treibmittels kann in jedem der drei Teilschritte des erfindungsgemäßen Verfahrens erfolgen. Es ist möglich, die gesamte Treibmittelmenge auf einmal oder in mehreren Teilmengen zu dosieren.

Bevorzugt ist die Dosierung direkt vor dem Dispergierschritt. Dadurch kommt es zu einer Herabsetzung der Viskosität des Styrolpolymerisats, was sich vorteilhaft auf die Größenverteilung der Perlen auswirkt. Bevorzugt sollte die Viskosität der Treibmittel enthaltenden Polystyrol-Lösung an dieser Stelle kleiner als 10 Pa·s sein und insbesondere zwischen 0,6 und 1,6 Pa·s liegen. Bei der Verwendung von Kohlendioxid als Treibmittel oder Treibmittelbestandteil wird in vorteilhafter Weise ein Kohlendioxidadsorber gemäß EP-A-542 066 eingesetzt.

Während des Verfahrens bzw. bei der Aufarbeitung können die üblichen Zusätze hinzugefügt werden. Die Zusätze verleihen dem expandierbaren Styrol bestimmte Eigenschaften. Genannt seien beispielsweise Flammschutzmittel auf Basis von organischen Halogen-, insbesondere Brom- und/oder Chlorverbindungen, wie Trisbrompropylphosphat, Hexabromcyclododecan, Chlorparaffine, sowie Synergisten für Flammschutzmittel, wie Dicymyl und hochzersetzliche organische Peroxide, ferner Antistatika, Stabilisatoren, Farbstoffe, Schmiermittel, Füllstoffe und beim Vorschäumen antiverklebend wirkender Stoffe, wie Zinkstearat, Melaminformaldehydkonzentrate, oder Kieselsäure, sowie Mittel zur Verkürzung der Entformzeit beim Ausschäumen, wie Glycerinester und/oder Hydroxycarbonsäureester. Die Zusatzstoffe können je nach der beabsichtigten Wirkung in den Teilchen homogen verteilt oder als Oberflächenbeschichtung vorliegen.

Zusatzstoffe, die in den Teilchen homogen verteilt vorliegen sollen, werden bevorzugt vor dem Dispergierschritt in das Polystyrol zugefügt. Die Oberflächenbeschichtungen werden, wie allgemein üblich, nach der Auspolymerisation auf die Perlen gebracht.

Es ist auch möglich, den erfindungsgemäß hergestellten expandierbaren Styrolpolymerisaten als Zusatzstoffe Polymere zuzusetzen. So bewirkt der Zusatz von Polyphenylenethern, insbesondere Poly-(2,6-dimethyl)-1,4-phenylenether, oder Poly-1,4-phenylensulfid eine Erhöhung der Wärmeformbeständigkeit der Styrolpolymerisate. Durch Zusatz von Elastomeren, wie Acrylnitril/Butadien/Styrol-Polymerisaten (ABS), kann die Elastizität der Schaumstoffe erhöht werden. Außerdem kann durch Zusatz von Polymerisaten wie beispielsweise Polyacrylnitril oder Styrol/Acrylnitril-Copolymeren die Öl- und Benzinbeständigkeit der Schaumstoffe verbessert werden.

Der Zusatz dieser Polymeren erfolgt vorzugsweise durch Auflösen in dem monomeren Styrol im ersten Verfahrensschritt oder durch Dosieren in styrolischer Lösung unmittelbar vor dem Dispergierschritt. Es ist jedoch beispielsweise auch möglich, die Polymeren in einem Extruder aufzuschmelzen und in dieser Form der Polystyrol/Styrol-Lösung zuzusetzen. Zusätzliches Polystyrol-Recyclat kann in gleicher Weise zugegeben werden.

Die erfindungsgemäße Polymerisation im Verfahrensschritt c. kann auch in Gegenwart von Kettenüberträgern, welche das Molekulargewicht regeln, durchgeführt werden. Bevorzugt eingesetzt werden hierfür tert.-Dodecylmercaptan oder dimeres alpha-Methylstyrol (DMS). Die Kettenüberträger werden zumeist in einer Menge von 0,001 bis 1,0 Gew.-%, bezogen auf das Gewicht der Monomeren, zugesetzt. Der Zusatz zum Reaktionsgemisch erfolgt vorzugsweise unmittelbar vor dem Dispergierschritt. Weiterhin ist der Zusatz von Verzweigern, die zumeist in Mengen von 0,001 bis 0,1 Gew.-% verwendet werden, möglich. Verzweiger und Monomere mit mehr als einer, vorzugsweise zwei, polymerisierbaren Doppelbindungen, wie Butadien, Isopren, Vinylcyclohexen, Vinylacrylat, Divinylbenzol, Glykoldimethacrylat, Butandioldimethacrylat und Hexandioldimethacrylat. Ihr Zusatz zum Reaktionsgemisch erfolgt analog den Reglern.

Die nach dem erfindungsgemäßen Verfahren hergestellten expandierbaren Styrolpolymerisatteilchen haben im allgemeinen Durchmesser zwischen 0,2 und 4 mm. Die Teilchendurchmesser lassen sich je nach dem verwendeten Dispergierverfahren gut und präzise steuern. So kann bei Verwendung eines statischen Mischers die Teilchengröße d' beispielsweise durch eine Erhöhung der Strömungsgeschwindigkeit im Mischer verkleinert werden. Durch eine Erhöhung des Verhältnisses von Länge zu Durchmesser des statischen Mischers wird die Teilchengröße d' bis zum Erreichen des Gleichgewichtswertes ebenfalls verkleinert.

Eine Erhöhung der Stabilisatorkonzentration führt im allgemeinen zu einer Verkleinerung der Teilchengröße d'. Auch die Teilchengrößenverteilung β läßt sich durch die Dispergierbedingungen und i das eingesetzte Stabilisatorsystem beeinflussen.

So wird die Teilchengrößenverteilung mit zunehmender Viskosität des Styrolvorpolymerisats breiter, z.B. durch eine Erhöhung des Polystyrolgehalts im ersten Teilschritt.

Bei der Verwendung eines Intensivmischers als Dispergierelement läßt sich die Teilchengröße d' im Bereich zwischen 0,5 und 1,2 mm problemlos durch die Veränderung der Schergeschwindigkeit im Rotor/Stator einstellen. Wird die Dispergierung im kontinuierlich i durchströmten Rührkessel durchgeführt, läßt sich die Teilchengrößenverteilung durch die Rührerdrehzahl sowie durch Reaktoreinbauten, wie zum Beispiel Strombrecher, in weiten Bereichen beeinflussen.

Die nach dem erfindungsgemäßen Verfahren hergestellte treibmittelhaltigen Styrolpolymerisat-Teilchen können nach üblichen Methoden, z.B. mittels Wasserdampf, zu Schaumstoffteilchen mit einem Durchmesser zwischen 0,1 und 2 cm und einer Schüttdichte zwischen 0,005 und 0,1 g/cm³ vorgeschäumt werden.

Die so vorgeschäumten Teilchen können auf bekanntem Wege zu Schaumstoff-Formteilen mit einer Dichte von 0,005 bis 0,1 g/cm³ ausgeschäumt werden.

Die Erfindung soll an nachstehenden Beispielen näher erläutert werden:

### Beispiel 1

In einem Extruder vom Typ ZSK 53 wurden 25 kg/h gewaschenes und getrocknetes expandierbares Polystyrol (Pentangehalt: 6 %, Randfraktion mit Perlgröße kleiner als 0,2 mm) bei 150°C aufgeschmolzen. Zur Schmelze wurden in denselben Extruder 25 kg/h Styrol zugefahren. Diese ca. 50 %ige Polystyrollösung wurde aus dem Extruder ausgeschleust. Anschließend wurden zur Mischung 1,7 kg/h Pentan und 0,25 kg/h Dicumylperoxid hinzudosiert. Zur homogenen Vermischung wurde das Gemisch über einen statischen Mischer geleitet und in einem Wärmetauscher auf ca. 120°C temperiert.

Das Styrolpolymerisat wurde in einem statischen Mischer vom Typ Kenics mit einem Leerrohrdurchmesser von 9 mm und einer Länge von 1600 mm in 54 kg/h einer auf 120°C erwärmten 0,5 %igen Lösung von Polyvinylalkohol in Wasser dispergiert.

Die so erzeugte Suspension wurde durch einen turbulenten Rohrreaktor mit einem Durchmesser von 16 mm und einer Länge von 2500 m geleitet. Die Verweilzeit betrug 4 Stunden, die Temperatur wurde bei 130 - 140°C gehalten. Am Ende des Rohrreaktors wurde die Suspension auf 35°C abgekühlt und ausgeschleust.

Das erhaltene Perlpolymerisat wurde mittels Siebschleudern von der wäßrigen Phase abgetrennt, mit Wasser gewaschen und oberflächengetrocknet. Von den Perlen wurden der mittlere Perldurchmesser d' und die Verteilungsbreite β nach DIN 66 145 bestimmt.

100 Teile des expandierbaren Polystyrol-Granulates mit der Perlgrößenfraktion zwischen 0,7 und 1,0 mm Durchmesser wurden im Schaufelmischer während 4 Minuten mit 0,4 Teilen Glycerinmonostearat beschichtet.

Ein Teil der beschichteten Perlen wurde in einem diskontinuierlichen Vorschäumer 6 Minuten mit strömendem Wasserdampf behandelt und danach das Schüttgewicht bestimmt.

Zum Vorschäumen diente ein mit einem Metallrahmen eingefaßtes Sieb (Maschenweite: 0,1 bis 0,2 mm) mit den Abmessungen 1000 x 800 x 250 mm, welches sich in einem abgeschlossenen Metallgehäuse mit Dampfzuleitung und Dampfabzugsvorrichtung befand.

Der Wasserdampf von 100°C strömte von unten in die Vorschäumapparatur ein, passierte das Drahtgewebe mit den zu prüfenden Produkten und konnte durch die Dampfabzugsvorrichtung wieder entweichen. Vor Beginn der Prüfungen wurde die Apparatur zunächst ca. 5 min vorgeheizt. Anschließend wurden 100 g der expandierenden Perlpolymerisate auf dem Drahtgewebe gleichmäßig verteilt, die Apparatur geschlossen und das Dampfventil geöffnet. Nach bestimmter Zeit wurde das Dampfventil wieder geschlossen und das Metallgehäuse geöffnet. Von dem vorgeschäumten Material wurde anschließend die Schüttdichte bestimmt.

Die Ergebnisse sind in der Tabelle festgehalten.

### Beispiel 2

Es wurde gearbeitet wie in Beispiel 1, jedoch wurde anstelle des Extruders eine 50 %ige Lösung von expandierbarem Polystyrol (Pentangehalt 6 %) in Styrol in einem Rührkessel hergestellt. Die Lösezeit betrug 4 Stunden und 30 Minuten bei einer Temperatur von 35°C. Dieses Styrolvorpolymerisat wurde mit einem Austrag von 50 kg/h aus dem Rührkessel ausgeschleust. Anschließend wurden zur Mischung 1,7 kg/h Pentan und 0,25 kg/h Dicumylperoxid hinzudosiert. Zur homogenen Vermischung wurde das Gemisch über einen statischen Mischer geleitet und in einem Wärmetauscher auf ca. 120°C temperiert.

Alle nachfolgenden Verfahrensschritte entsprechen dem Vorgehen wie in Beispiel 1 beschrieben.

### Beispiele 3 und 4

Es wurde verfahren wie in den Beispielen 1 bzw. 2, jedoch wurde folgender Stabilisator eingesetzt:

Eine Lösung aus 1900 g Na₃PO₄ · 12 H₂O in 30 l Wasser und eine Lösung von 1250 g CaCl₂·2H₂O in 20 l Wasser werden unter Rühren zu 200 l Wasser hinzugefügt. Zu dieser Lösung wurden 200 g einer 10 %igen Lösung von Mersolat® K 30 (Firma Bayer AG) zugesetzt.

Die an den erhaltenen Perlen bestimmten Werte sind in der Tabelle festgehalten.

### Beispiele 5 und 6

Es wurde verfahren wie in den Beispielen 1 bzw. 2, jedoch wurde folgender Stabilisator eingesetzt:

143,4 g Na₄P₂O₇ werden unter Rühren in 80 1 Wasser gelöst, das auf 90°C vorgeheizt ist. Anschließend wird 15 Minuten gerührt. Zu dieser Lösung werden anschließend 292 g MgSO₄·7H₂O gegeben und nochmals 10 Minuten gerührt. Man läßt die Mischung auf 50°C abkühlen und setzt anschließend 72 g einer 10%igen Lösung von Mersolat® K 30 (Firma Bayer AG) zu.

**Tabelle**

| | Bsp. 1 | Bsp. 2 | Bsp. 3 | Bsp. 4 | Bsp. 5 | Bsp. 6 |
|---|---|---|---|---|---|---|
| Mittlerer Perlduchmesser d' (mm) | 0,70 | 0,75 | 0,79 | 0,87 | 0,85 | 0,85 |
| Verteilungsbreite β | 15,4 | 16,8 | 17,0 | 16,9 | 17,2 | 16,8 |
| Pentangehalt (Gew.-%) | 5,8 | 6,0 | 6,1 | 6,1 | 6,3 | 6,0 |
| Schüttgewicht nach 6 min (g/l) | 14,0 | 13,9 | 14,1 | 13,1 | 13,3 | 13,5 |
| Reststyrolgehalt (ppm) | <1000 | <1000 | <1000 | <1000 | <1000 | <1000 |

## Patentansprüche

1. Verfahren zur Herstellung von perlförmigen expandierbaren Styrolpolymerisaten durch Polymerisation von Styrol, das bis zu 50 Gew.-%, bezogen auf das Styrolpolymerisat, andere olefinisch ungesättigte Monomere enthalten kann, in Gegenwart von 1 bis 10 Gew.-% mindestens eines flüchtigen Treibmittels, umfassend:
a. Bereitstellen einer 10 bis 80 Gew.-%igen Lösung von Polystyrol in Styrol,
b. Dispergieren der Lösung in einer wäßrigen Phase in Gegenwart von Suspensionsstabilisatoren,
c. kontinuierliches Auspolymerisieren des Styrols in wäßriger Suspension auf einen Reststyrolgehalt von weniger als 2000 ppm.

2. Verfahren nach Anspruch 1, dadurch gekennzeichnet, daß im Verfahrensschritt a. diskontinuierlich in einem oder mehreren Lösungskesseln 10 bis 80 gew.-%ige Lösungen durch Auflösen von Polystyrol in Styrol hergestellt werden.

3. Verfahren nach Anspruch 1, dadurch gekennzeichnet, daß im Verfahrensschritt a. kontinuierlich in einem Extruder Polystyrol aufgeschmolzen und mit Styrol zu einer 10 bis 80 gew.-%igen Lösung vermischt wird.

4. Verfahren nach den Ansprüchen 2 oder 3, dadurch gekennzeichnet, daß Polystyrol mit einem Treibmittelgehalt von 1 bis 10 Gew.-% eingesetzt wird.

5. Verfahren nach Anspruch 4, dadurch gekennzeichnet, daß EPS-Randfraktionen eingesetzt werden.

6. Verfahren nach Anspruch 1, dadurch gekennzeichnet, daß der Verfahrensschritt c. in einem Rohrreaktor durchgeführt wird.

7. Verfahren nach Anspruch 4, dadurch gekennzeichnet, daß in einem Rohrreaktor mit einem l:d-Verhältnis von größer als 1000:1 die Suspension in einer turbulenten Pfropfenströmung durchbewegt wird und dabei die Auspolymerisation stattfindet.

8. Verfahren nach Anspruch 1, dadurch gekennzeichnet, daß in den Verfahrensschritten b. und c. als Suspensionsstabilisatoren Pickering-Systeme oder organische Kolloidstabilisatoren eingesetzt werden.

9. Verfahren nach Anspruch 1, dadurch gekennzeichnet, daß als Treibmittel C₃-C₇-Kohlenwasserstoffe eingesetzt werden.

10. Verfahren nach Anspruch 1, dadurch gekennzeichnet, daß als Treibmittel Kohlendioxid oder C₃-C₇-Kohlenwasserstoffe im Gemisch mit Kohlendioxid eingesetzt werden.

11. Verfahren nach Anspruch 1, dadurch gekennzeichnet, daß das Treibmittel direkt vor dem Verfahrensschritt b. zugesetzt wird.

12. Verfahren nach Anspruch 10, dadurch gekennzeichnet, daß die Viskosität der Treibmittel enthaltenden Polystyrol-Lösung kleiner als 10 Pa·s ist.

## Claims

1. A process for preparing bead-form expandable styrene polymers by polymerizing styrene, which may contain up to 50% by weight, based on the styrene polymer, of other olefinically unsaturated monomers, in the presence of from 1 to 10% by weight of at least one volatile blowing agent, and which includes:
a. preparing a solution of polystyrene in styrene of from 10 to 80% strength by weight,
b. dispersing the solution in an aqueous phase in the presence of suspension stabilizers,
c. continuously polymerizing the styrene to completion in aqueous suspension as far as a residual styrene content of below 2000 ppm.

2. A process as claimed in claim 1, wherein in process step a. solutions of from 10 to 80% strength by weight are prepared discontinuously in one or more dissolvers by dissolving polystyrene in styrene.

3. A process as claimed in claim 1, wherein in process step a. polystyrene is melted and mixed with styrene to give a solution of from 10 to 80% strength by weight continuously in an extruder.

4. A process as claimed in claim 2 or 3, wherein polystyrene with a content of blowing agent of from 1 to 10% by weight is employed.

5. A process as claimed in claim 4, wherein EPS marginal fractions are employed.

6. A process as claimed in claim 1, wherein process step c. is carried out in a tubular reactor.

7. A process as claimed in claim 4, wherein the suspension is passed through a tubular reactor with an 1:d ratio of greater than 1000:1 in a turbulent plug flow during which the polymerization is completed.

8. A process as claimed in claim 1, wherein in the process steps b. and c. Pickering systems or organic colloid stabilizers are employed as suspension stabilizers.

9. A process as claimed in claim 1, wherein C₃-C₇-hydrocarbons are employed as blowing agent.

10. A process as claimed in claim 1, wherein carbon dioxide or C₃-C₇-hydrocarbons mixed with carbon dioxide are employed as blowing agent.

11. A process as claimed in claim 1, wherein the blowing agent is added directly prior to the process step b.

12. A process as claimed in claim 10, wherein the viscosity of the polystyrene solution containing blowing agent is less than 10 Pa·s.

## Revendications

1. Procédé pour la préparation de polymères de styrène expansibles en perles par polymérisation du styrène qui peut contenir, jusqu'à concurrence de 50% en poids rapportés aux polymères de styrène, d'autres monomères à insaturation oléfinique, en présence d'au moins un agent moussant volatil à concurrence de 1 à 10% en poids, comprenant le fait de:
a. préparer une solution de 10 à 80% en poids de polystyrène dans du styrène,
b. disperser la solution dans une phase aqueuse en présence de stabilisateur de la suspension,
c. procéder à une polymérisation complète du styrène en continu en suspension aqueuse jusqu'à ce que l'on obtienne une teneur résiduelle en styrène inférieure à 2.000 ppm.

2. Procédé selon la revendication 1, caractérisé en ce qu'à l'étape opératoire a., on prépare en discontinu, dans une ou plusieurs cuves de dissolution, des solutions de 10 à 80% en poids par dissolution du polystyrène dans du styrène.

3. Procédé selon la revendication 1, caractérisé en ce qu'à l'étape opératoire a., on porte à fusion du polystyrène en continu dans une extrudeuse et on mélange la masse fondue avec du styrène pour obtenir une solution jusqu'à concurrence de 10 à 80% en poids.

4. Procédé selon les revendications 2 ou 3, caractérisé en ce qu'on met en oeuvre du polystyrène possédant une teneur en agent moussant de 1 à 10% en poids.

5. Procédé selon la revendication 4, caractérisé en ce qu'on met en oeuvre des fractions marginales de EPS.

6. Procédé selon la revendication 1, caractérisé en ce qu'on effectue l'étape opératoire c. dans un réacteur tubulaire.

7. Procédé selon la revendication 4, caractérisé en ce que, dans un réacteur tubulaire possédant un rapport l:d supérieur à 1.000:1, la suspension traverse un courant de greffage turbulent, la polymérisation complète ayant lieu à cette occasion.

8. Procédé selon la revendication 1, caractérisé en ce qu'on met en oeuvre, dans les étapes opératoires b. et c., à titre de stabilisateurs de la suspension, des systèmes de Pickering ou d'autres stabilisateurs colloïdaux organiques.

9. Procédé selon la revendication 1, caractérisé en ce qu'on met en oeuvre, à titre d'agents moussants, des hydrocarbures en C₃-C₇.

10. Procédé selon la revendication 1, caractérisé en ce qu'on met en oeuvre, à titre d'agents moussants, du dioxyde de carbone ou bien des hydrocarbures en C₃-C₇ en mélange avec du dioxyde de carbone.

11. Procédé selon la revendication 1, caractérisé en ce qu'on ajoute l'agent moussant directement avant l'étape opératoire b.

12. Procédé selon la revendication 10, caractérisé en ce que la viscosité de la solution de polystyrène contenant un agent moussant est inférieure à 10 Pa.s.
